(19) Europäisches Patentamt

European Patent Office

Office européen des brevets

(11) Veröffentlichungsnummer: **0 300 279 B1**

(12) **EUROPÄISCHE PATENTSCHRIFT**

(45) Veröffentlichungstag der Patentschrift: **30.12.92**

(21) Anmeldenummer: **88110849.2**

(22) Anmeldetag: **07.07.88**

(51) Int. Cl.⁵: **A01D 43/10**, A01D 82/00

(54) **Verfahren zum Aufbereiten eines geschnittenen Mähgutteppichs sowie Walzenaufbereiter zur Durchführung dieses Verfahrens.**

(30) Priorität: **21.07.87 DE 3724039**

(43) Veröffentlichungstag der Anmeldung:
**25.01.89 Patentblatt 89/04**

(45) Bekanntmachung des Hinweises auf die
Patenterteilung:
**30.12.92 Patentblatt 92/53**

(84) Benannte Vertragsstaaten:
**CH DE FR GB LI NL**

(56) Entgegenhaltungen:
**DD-A- 115 018**
**DE-A- 2 023 274**
**DE-U- 2 225 675**
**DE-U- 6 603 594**
**GB-A- 2 056 835**

(73) Patentinhaber: **Friedrich Mörtl Schleppergerätebau GmbH & Co. KG
Kesslerstrasse 2
W-8780 Gemünden(DE)**

(72) Erfinder: **Grenzebach, Hans
Spessartweg 29
W-8780 Gemünden/Main(DE)**

(74) Vertreter: **Rehberg, Elmar, Dipl.-Ing.
Postfach 3162 Am Kirschberge 22
W-3400 Göttingen(DE)**

EP 0 300 279 B1

# Beschreibung

Die Erfindung bezieht sich auf ein Verfahren zum Aufbereiten eines geschnittenen Mähgutteppichs mit den im Oberbegriff des Anspruchs 1 angegebenen Verfahrensschritten. Der Walzenaufbereiter für den geschnittenen Mähgutteppich zur Durchführung des Verfahrens weist die im Oberbegriff des Anspruchs 5 angegebenen Merkmale auf. Derartige Walzenaufbereiter werden auch als Konditionierer oder Konditioniermaschinen bezeichnet. Sie werden oft in Verbindung mit einem Tellermähwerk eingesetzt, so daß der geschnittene Mähgutteppich unmittelbar in Arbeitsrichtung vorangehend entsteht und dann sofort in dem Walzenaufbereiter aufbereitet, d. h. geknickt und gequetscht wird, worauf der Mähgutteppich am Ende des Walzenaufbereiters auf den Boden abgelegt wird. Es ist aber auch möglich, den Walzenaufbereiter als vom Mähwerk getrennte Maschine zu bauen und einzusetzen.

Es sind in der Technik zwei Arten von Aufbereitern bekannt. Die eine Bauart arbeitet mit schlagenden Werkzeugen, die meist pendelnd an einem Antriebskörper aufgehängt sind. Infolge hoher Antriebsdrehzahlen wird hier das Mähgut zerschlagen, wobei bei solchem Mähgut, welches Blattanteile aufweist, wie beispielsweise Luzerne, ein erheblicher Verlust entsteht, weil abgeschlagenes Blattgut nicht mehr aufgenommen werden kann. Auf diese Art von Konditionierern bezieht sich die vorliegende Erfindung nicht. Bei der anderen Bauart von Konditionierern werden zwei Walzen gegeneinander angestellt, die auf ihren Oberflächen mti Vorsprüngen und Vertiefungen versehen sind, so daß hier der Mähgutteppich durch den Durchzugsspalt zwischen den beiden Walzen geführt wird, in welchem der Mähgutteppich gequetscht, gedrückt und abknickt wird. Diese Walzenaufbereiter werden mit vergleichsweise geringeren Umfangsgeschwindigkeiten angetrieben. Zu dieser Bauart gehört auch der Walzenaufbereiter nach der vorliegenden Erfindung.

Ein Verfahren und ein Walzenaufbereiter der eingangs beschriebenen Art ist beispielsweise aus der DE-A-20 23 274 bekannt. Die beiden einander zugeordneten Walzen sind auf ihren Oberflächen mit leistenartigen Vorsprüngen und Vertiefungen versehen, die ineinandergreifen, so daß hier jeweils Bearbeitungsspalte gebildet werden. Die leistenartigen Vorsprünge und Vertiefungen sind in Spiralform über die Oberfläche der Walzen verteilt angeordnet. Die Walzen weisen gleichen Durchmesser auf und werden beide mit übereinstimmender Drehzahl, jedoch gegensinnig, angetrieben, damit der Formschluß zwischen den Vorsprüngen und Vertiefungen sichergestellt ist. Die Oberflächen der Walzen bestehen aus Gummi, wobei in diesem Profil auch die Vorsprünge und Vertiefungen eingearbeitet sind. Es können auch nur Vorsprünge vorgesehen sein, so daß die Vertiefungen gleichsam durch die Durchmesserverringerung zwischen zwei Vorsprüngen gebildet sind. Auf diese Art und Weise wird der von einem vorangehend angeordneten Tellermähwerk geschnittene Mähgutteppich aufbereitet, wobei er im Abstand der auftretenden Bearbeitungsspalte geknickt und insgesamt verdichtet wird. Dieses Zusammenpressen des Mähgutteppichs führt jedoch in nachteiliger Weise zu einer Verdichtung, so daß das Mähgut nach dem Verlassen der beiden Walzen nicht in optimal lockerer Ablage auf den Erdboden gelangt. Für einen beschleunigten Trocknungsvorgang des Mähguts ist nämlich nicht nur die Beschädigung der Halme des Mähgutteppichs durch Knicken oder Quetschen wichtig, sondern auch die lockere Ablage im Schwad. Es ist auch bereits bekannt, die Walzen gegeneinander nicht fest anzuordnen und zu lagern, sondern eine Walze fest zu lagern und die andere Walze gegen Federdruck ausweichbar zu lagern, damit ein besonders starker Mähgutteppich nicht so fest zusammengepreßt wird und auftretende Hindernisse wie Steine, Aststücke u. dgl. durch die Walzen hindurchlaufen können, ohne allzu große Beschädigungen an der Oberfläche der Walzen zu hinterlassen.

Die andere Art von Aufbereitern ist aus der GB-A-2 056 835 bekannt. Auf der einen Walze sich Flügel aus flexiblem Material angeordnet, während die andere Walze Vorsprünge aus im Querschnitt U-förmigen Leisten trägt, zwischen denen sich plattenförmige Vertiefungen befinden. Die Vorsprünge, Ausrundungen und Vertiefungen erstrecken sich jeweils über die Arbeitsbreite. Die beiden Walzen sind über Zahnräder miteinander gekoppelt, die so relativ zueinander einstellbar sind, daß die flexiblen Vorsprünge an der einen Walze mit einer vorauslaufenden Kante, einer nacheilenden Kante oder auch mit der Vertiefung zusammenarbeitet. Die Anordnung kann so getroffen sein, daß die Vorsprünge auf der einen Walze im Vergleich zu den Vertiefungen auf der anderen Walze mit unterschiedlicher Umfangsgeschwindigkeit bewegt werden. Dabei arbeiten lediglich die Vorsprünge der einen Walze mit den Vertiefungen der anderen Walze zusammen. Die andere Walze besitzt zwischen den Vertiefungen zwar im Querschnitt die U-förmigen Ausrundungen; es sind jedoch an der die Vorsprünge tragenden Walze keine Gegenflächen hierzu vorgesehen. Dies ist auch bei dieser Art von Aufbereiter gar nicht beabsichtigt, da es in erster Linie nur auf die schlagende Wirkung der Vorsprünge aus elastischem Material ankommt.

Der Erfindung liegt die Aufgabe zugrunde, ein Verfahren und einen Walzenaufbereiter der eingangs beschriebenen Art so weiterzubilden, daß die halm- und stengelartigen Bestandteile des Mähgutteppichs nicht nur geknickt und gequetscht, sondern auch aufgerieben bzw. aufgefasert werden.

Erfindungsgemäß wird dies bei dem Verfahren der eingangs beschriebenen Art dadurch erreicht, daß die Vorsprünge und die Vertiefungen an den Walzen an der Ober- und Unterseite des Mähgutteppichs mit unterschiedlichen Umfangsgeschwindigkeiten angreifen, wobei sich die unterschiedlichen Umfangsgeschwindigkeiten jeweils nach der periodischen Unterbrechung jedes Bearbeitungsspalts ändern. Hierdurch tritt in jedem Bearbeitungsspalt nicht nur eine Knickwirkung, sondern überlagert eine Schiebewirkung an den Bestandteilen des Mähgutteppichs auf. Diese Relativbewegung der Halme zueinander im Bearbeitungsspalt führt dazu, daß die Halme aneinander gerieben und damit über einen größeren Bereich aufgeschlossen werden. Von dieser Reibewirkung werden nicht nur die Oberflächenpartien des Mähgutteppichs erfaßt, sondern auch der innere Querschnitt. Gleichzeitig wird mit der Relativbewegung einer reinen Verdichtungswirkung und einem Zusammenbacken des Mähgutteppichs entgegengewirkt, so daß auch eine lockere Ablage des Mähguts im Schwad auf dem Boden nachfolgt. Die einzelnen Halme werden über den Querschnitt des Mähgutteppichs unterschiedlich von den beiden angreifenden Umfangsgeschwindigkeiten erfaßt, so daß auch eine gewisse Tiefenwirkung der Aufbereitung bis in das Innere des Mähgutteppichs auftritt. Die Reibung beschädigt dabei vorteilhaft nicht nur die Wachsschicht der Halme, sondern fasert die halm- und stengelartigen Bestandteile des Mähgutteppichs in gewissen Bereichen auch auf. Durch die schiebende Relativbewegung über die unterschiedlichen Geschwindigkeiten, die an beiden Seiten des Mähgutteppichs im jeweiligen Bearbeitungsspalt angreifen, wird auch das Auffedern der Walzen im Bearbeitungsspalt im Vergleich zum Stand der Technik begrenzt, so daß auch bei einem durch Auffederbewegungen verursachten konischen Bearbeitungsspalt die unbearbeiteten Bereiche im Mähgutteppich verkleinert sind. Zudem tritt eine gewisse Ausrichtwirkung für die Halme durch die unterschiedlichen Geschwindigkeiten in Förderrichtung auf, was gleichbedeutend mit einer verringerten Verfilzungswirkung des Mähgutteppichs ist.

Schließlich sind die unterschiedlich angreifenden Umfangsgeschwindigkeiten auch insofern vorteilhaft, als damit ein Selbstreinigungseffekt erzielt wird. An den Oberflächen der Walzen anhaftendes Mähgut wird durch die schiebende Wirkung der Oberflächen der beiden Walzen zueinander immer wieder losgelöst und beseitigt. Dadurch, daß bezüglich der beiden den Bearbeitungsspalt bildenden Walzen jeweils ein Vorsprung und eine Vertiefung zusammenarbeiten, ändert sich das Paar der an dem Mähgutteppich von Bearbeitungsspalt zu Bearbeitungsspalt angreifenden Umfangsgeschwindigkeiten. Durch diese von Bearbeitungsspalt zu Bearbeitungsspalt unterschiedlichen Umfangsgeschwindigkeiten werden im Mähgutteppich unterschiedliche Bearbeitungszonen geschaffen, in denen das Ausmaß des Reibeeffekts unterschiedlich zutage tritt. Es versteht sich, daß dies jedoch alles immer so geschieht, daß die Umfangsgeschwindigkeiten der Vorsprünge der beiden Walzen zueinander unterschiedlich bleiben.

Wenn die unterschiedlichen Umfangsgeschwindigkeiten sich von Bearbeitungsspalt zu Bearbeitungsspalt alternierend ändern, sind nur zwei Paare unterschiedlicher Umfangsgeschwindigkeiten vorgesehen, die abwechselnd angreifen.

Die in jedem Bearbeitungsspalt auftretenden unterschiedlichen Umfangsgeschwindigkeiten können etwa im Verhältnis von 1:2 bis 1:4 stehen. Es handelt sich also nicht um zufällig auftretende, geringfügige Unterschiede in der Umfangsgeschwindigkeit, sondern der Unterschied nimmt ein erhebliches Ausmaß an, um ganz gezielt die Aufschlußwirkung zu erreichen. Es ist auch möglich, die Walzen mit gleicher oder auch unterschiedlicher Drehzahl anzutreiben.

Der Walzenaufbereiter der eingangs beschriebenen Art kennzeichnet sich erfindungsgemäß dadurch, daß die leistenartige Vorsprünge und Vertiefungen auf dem Umfang der beiden einander zugeordneten Walzen so verteilt angeordnet und die Walzen so angetrieben sind, daß sich unterschiedliche Umfangsgeschwindigkeiten in den Bearbeitungsspalten ergeben, und daß die Vorsprünge und Vertiefungen aus Metall bestehen. Damit wird gleichsam der Querschnitt des Mähgutteppichs in der jeweiligen Oberfläche unterschiedlich beaufschlagt und bewegt, wobei schiebende und ziehende Kraftkomponenten auftreten, die in Verbindung mit der Reibewirkung der einzelnen Bestandteile des Mähgutteppichs aneinander zu dem gewünschten Aufschluß des Mähguts führen, ohne daß kleinblättrige Bestandteile abgeschlagen und/oder der Mähgutteppich in nachteiliger Weise stark verdichtet wird. Die leistenartigen Vorsprünge und auch die Vertiefungen bestehen aus Metall. Dies vereinfacht nicht nur die Fertigung, sondern erbringt auch den zusätzlichen Vorteil, daß Metall im Vergleich zu Gummi weniger verschleißanfällig ist. Die Vorsprünge und die Vertiefungen lassen sich jeweils körperlich an den Walzen ausbilden. Es ist aber auch möglich, lediglich Vorsprünge auf einen z. B. runden Querschnitt aufweisenden Walzenkörper aufzubringen, beispielsweise zu schrauben oder zu schweißen, wobei dann die Vertiefungen gleichsam automatisch zwischen den Vorsprüngen entstehen. Die Anzahl der Vorsprünge und Vertiefungen auf den beiden Walzen, die Walzendurchmesser und die Drehzahlen der beiden Walzen müssen aufeinander abgestimmt sein, und zwar derart, daß trotz unterschiedlicher Umfangsgeschwindigkeiten die Bearbeitungsspalte immer wieder gebildet werden. Dabei greifen die Vorsprünge und Vertiefungen auf der Oberfläche der beiden Walzen ineinander. Es müssen die Drehzahlen und die Durchmesser der leistenartigen Vorsprünge auf den Walzen relativ zu den Vertiefungen so abgestimmt sein, daß trotz der notwendigen unterschiedlichen Umfangsgeschwindigkeiten die leistenartigen Vorsprünge nicht aneinanderschlagen, sondern sich jeweils relativ zu den Vertiefungen durch diese hindurch bewegen. Da die leistenartigen Vorsprünge und die Vertiefungen über die Arbeitsbreite durchgehend vorgesehen sind, wird der gesamte Mähgutteppich auch über die Arbeitsbreite gesehen durchgehend bearbeitet, etwa im Gegensatz zu einem punktförmigen Hineinstechen in den Mähgutteppich, wie dies im Stand der Technik beschrieben wurde.

Die Realisierung des Walzenaufbereiters kann im wesentlichen auf zwei Arten geschehen, aber auch Kombinationen sind möglich. Die Walzen können gleiche oder ungleiche Durchmesser aufweisen. Sie müssen ggf. mit unterschiedlichen Drehzahlen angetrieben werden, um die unterschiedlichen Umfangsgeschwindigkeiten zu erzielen oder es müssen unterschiedliche wirksame Durchmesser vorgesehen sein. Bei diesen beiden Ausführungsformen ergibt sich der weitere Vorteil, daß die Bauhöhe noch etwas kleiner gestaltet werden kann als im Stand der Technik.

Die Vorsprünge und Vertiefungen können auch in die Oberfläche der Walzen integriert sein, wobei die Walzen somit unrunden Querschnitt aufweisen. Weiterhin ist es möglich, nicht nur zwei Walzen zur Bildung von Bearbeitungsspalten einander zuzuordnen, sondern beispielsweise auch eine dritte Walze der ersten Walze zuzuordnen, um somit insgesamt unter Verwendung von drei Walzen die Anzahl der Bearbeitungsspalte zu verdoppeln. Einen ruhigen Lauf der Walzen gegeneinander erreicht man dann, wenn die Vorsprünge und Vertiefungen spiralig zueinander über die Oberfläche der Walzen verteilt angeordnet werden, so daß der Angriff der Bearbeitungsspalte am Mähgut zu keiner Zeit verlorengeht. Die Vorsprünge und Vertiefungen können mit entsprechend ihren jeweils unterschiedlichen Umfangsgeschwindigkeiten unterschiedlichen Spiralwinkeln auf der Oberfläche der Walzen vorgesehen sein. Diese unterschiedlichen Winkel müssen dann eingehalten werden, wenn ein Eingriff der Vorsprünge in Vertiefungen erfolgt. Die Walzen können auch so stark gegeneinander angestellt sein, daß sie bei leerlaufenden Walzen sich nahezu oder tatsächlich berühren. Es versteht sich, daß eine der beiden Walzen gegen Federdruck ausweichbar gelagert ist und ansonsten die Begrenzung der Anstellung über verstellbare Anschläge realisiert werden kann.

Die beiden einander zugeordneten Walzen können eine unterschiedliche Anzahl von Vorsprüngen aufweisen und das Verhältnis der Anzahlen der Vorsprünge der beiden Walzen entspricht dem umgekehrten Drehzahlenverhältnis der beiden Walzen zueinander.

Die Erfindung wird anhand verschiedener Ausführungsbeispiele weiter erläutert und beschrieben. Es zeigen:

Figur 1    eine Frontansicht des Walzenaufbereiters mit einem Scheibenmähwerk,

Figur 2    eine Darstellung des Antriebs für die beiden Walzen,

Figur 3    eine erste Ausführungsform der beiden Walzen,

Figur 4    eine Schnittdarstellung des Mähgutteppichs im Bearbeitungsspalt,

Figur 5    eine weitere Ausführungsform unter Einsatz von Walzen unterschiedlicher Durchmesser und

Figur 6    eine weitere Realisierungsmöglichkeit.

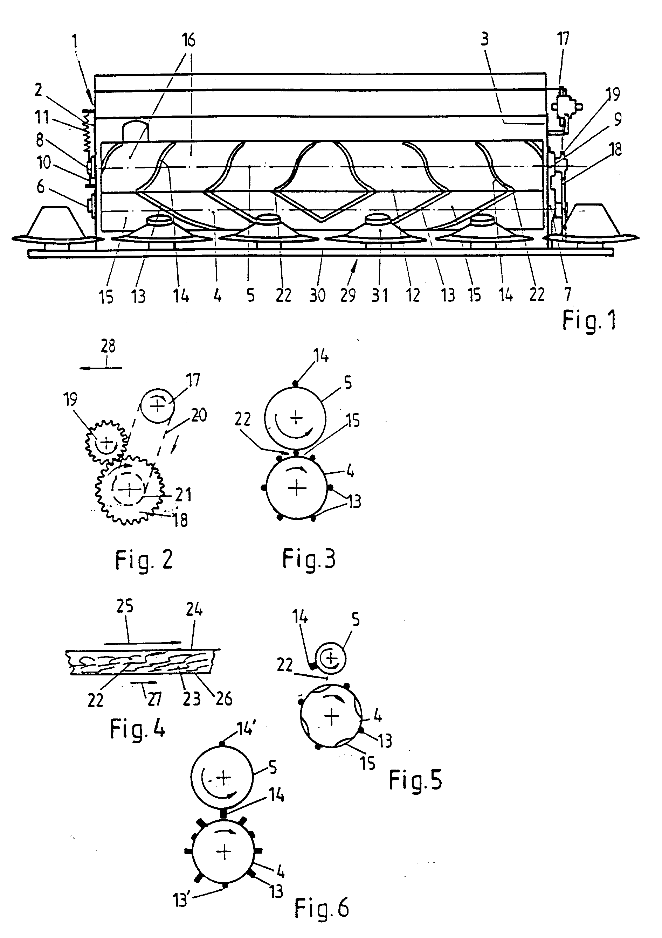

Der in Figur 1 mit seinen für das Verständnis der Erfindung notwendigen Teilen dargestellte Walzenaufbereiter weist einen Rahmen 1 auf, zwischen dessen Seitenteilen 2, 3 eine erste Walze 4 und eine zweite Walze 5 drehbar gelagert sind. Die untere Walze 4 ist in ortsfester Lage in in den Seitenteilen 2, 3 angeordneten Lagern 6, 7 drehbar gelagert, während der oberen Walze 5 zugeordnete Lager 8, 9 in Richtung auf die festen Lager 6, 7 verschiebbar geführt sind. Zur Begrenzung der Verschiebbarkeit sind Anschläge 10 auf beiden Seiten bzw. im Bereich beider Seitenteile 2, 3 vorgesehen. Aus Übersichtlichkeitsgründen ist nur der Anschlag 10 im Bereich des Seitenteils 2 dargestellt. Weiterhin sind Federn 11 vorgesehen, die ebenfalls nur im Bereich der Seitenteile 2 dargestellt sind, aber auch im Bereich des Seitenteils 3 angeordnet sind. Diese Federn 11 sind vorzugsweise über eine entsprechende Schwingenkonstruktion als Zugfedern belastet und ziehen die obere Walze 5 nach unten gegen die Anschläge 10, die entsprechend ver- und einstellbar sind.

Die beiden Walzen 4 und 5 werden gegensinnig angetrieben und bilden so zwischen sich einen Durchzugsspalt 12 für einen Mähgutteppich. Beide Walzen 4, 5 sind auf ihrer Oberfläche mit leistenartigen Vorsprüngen 13 bzw. 14 versehen, die zwischen sich Vertiefungen 15 und 16 freilassen bzw. bilden. Die Vertiefungen 15 und 16 können auch entsprechend der Anordnung der Vorsprünge 13 und 14 aus körperlich ausgebildeten Vertiefungen in die Oberfläche der Walzen 3 und 4 eingearbeitet sein, wie dies Figur 5 verdeutlicht. Die Vorsprünge 13 und 14 sind spiralig über den Umfang der Walzen 4 und 5 angeordnet und besitzen, wie ersichtlich, einen unterschiedlichen Spiralwinkel, dessen Größe auf die unterschiedlichen Drehzahlen abgestimmt ist. Der Antrieb kann über Kettenräder oder auch über Zahnräder erfolgen. Er wird in der Regel von der Zapfwelle eines Schleppers abgeleitet und gelangt auf ein Antriebsrad 17. Die Walze 4 ist mit einem Zahnrad 18 und die Walze 5 mit einem Zahnrad 19 versehen, die unmittelbar ineinander eingreifen. Die Zähnezahl der beiden Zahnräder 18 und 19 steht hier beispielsweise im Verhältnis von 3:1, so daß die Walze 5 dreimal so schnell dreht wie die Walze 4. Entsprechend ist der Spiralwinkel der Vorsprünge 14 steiler als der Spiralwinkel der Vorsprünge 13 auf der Walze 4. Ein solcher Antrieb ist in Figur 2 noch einmal verdeutlicht, wobei ersichtlich ist, daß der Antrieb von dem Antriebsrad 17 zunächst über eine Kette 20 auf ein mit dem Zahnrad 18 drehfest verbundenes Rad 21 übertragen wird und das Zahnrad 19 mit dem Zahnrad 18 kämmt. Auch die Verwendung nur von Kettenrädern oder eine gemischte Bauweise ist natürlich möglich. Wesentlich ist, daß die beiden Walzen 4 und 5 gegensinnig angetrieben werden, und daß unterschiedliche Umfangsgeschwindigkeiten der Vorsprünge 13 und 14 bzw. in jedem Bearbeitungsspalt 22 entstehen, der entweder zwischen einem Vorsprung 13 an der einen walze 4 und einem Vorsprung 14 an der anderen Walze 5 oder aber auch zwischen dem Vorsprung 13 der Walze 4 und der Vertiefung 16 der Walze 5 sowie der Vertiefung 15 der Walze 4 und dem Vorsprung 14 der Walze 5 jeweils gebildet werden. Wenn, wie in Figur 1 dargestellt, die beiden Walzen 4 und 5 gleiche Durchmesser aufweisen, ist es unerläßlich, die beiden Walzen 4 und 5 mit unterschiedlichen Drehzahlen anzutreiben. Andererseits sind aber auch gleiche Drehzahlen möglich, wenn die unterschiedlichen Umfangsgeschwindigkeiten durch unterschiedliche Durchmesser der Walzen 4 und 5 erzielt werden. Schließlich können die unterschiedlichen Umfangsgeschwindigkeiten auch durch unterschiedliche Drehzahlen und unterschiedliche Durchmesser realisiert werden. Wie Figur 4 zu erkennen gibt, ist hier ein Mähgutteppich 23 in einem Bearbeitungsspalt 22 dargestellt, wobei auf der einen Oberfläche 24 eine Umfangsgeschwindigkeit, verdeutlicht durch einen Pfeil 25 z. B. über die Vorsprünge 14 der Walze 5 angreift, während an der unteren Oberfläche 26 eine Umfangsgeschwindigkeit, verdeutlicht durch einen Pfeil 27, beispielsweise über eine Vertiefung 15 der Walze 4 angreift. Die beiden Umfangsgeschwindigkeiten bzw. Pfeile 25 und 27 stehen im Verhältnis von beispielsweise 3:1. Es sind also schon nennenswerte Unterschiede in den Umfangsgeschwindigkeiten, die an dem Mähgutteppich 23 angreifen und nicht nur ihre Auswirkung in den Oberflächen 24 und 26 nach sich ziehen, sondern auch eine gewisse Tiefenwirkung in das Innere des Mähgutteppichs bewirken. Dies führt dazu, daß die einzelnen Bestandteile des Mähgutteppichs aneinander gerieben werden, wodurch die Wachsschicht der Halme beschädigt wird und eine Aufschlußwirkung erzielt wird, derart, daß sich die Halme über gewisse Bereich öffnen und zerfasern. Daneben tritt natürlich auch die aus dem Stand der Technik bereits bekannte Knickwirkung an den Halmen bzw. Bestandteilen des Mähguts ein.

Die Figuren 3, 5 und 6 zeigen verschiedene Realisierungsmöglichkeiten des Walzenaufbereiters in stark schematisierter Form:
In all diesen Figuren sind der Einfachheit halber die Walzen 4 und 5 übereinander dargestellt, d. h. die Achsen dieser Walzen liegen in einer Vertikalebene. Tatsächlich wird man es bei einem ausgeführten Walzenaufbereiter vorziehen, die Achse der oberen Walze 5 in Arbeitsrichtung nach vorn zu verlagern, wie dies anhand der Darstellung der Zahnräder 18 und 19 in Figur 2 ersichtlich ist. Dabei ist die Arbeitsrichtung, also die Fahrrichtung des Walzenaufbereiters, durch einen Pfeil 28 angedeutet.

Bei dem Ausführungsbeispiel der Figur 3 besitzen die Walzen 4 und 5 gleiche Durchmesser und sie sind auch mit gleichen leistenartigen Vorsprüngen 13 und 14 versehen. In der einfachsten Form können diese Vorsprünge 13 und 14 als Rundstäbe aus Metall ausgebildet sein, die auf die Oberfläche der Walzen 4 und 5 aufgeschweißt sind. Die Anordnung der Vorsprünge 13 und 14 kann gerade, also achsparallel, oder auch wendelförmig sein, wie dies anhand von Figur 1 verdeutlicht wurde. Die Walze 4 weist hier auf den Umfang gleichmäßig verteilt sechs Vorsprünge 13 auf, während die Walze 5 nur zwei solcher Vorsprünge 14 besitzt. Durch die unterschiedlichen Umdrehungszahlen gemäß den verschieden langen Pfeilen sollen hier unterschiedliche Drehzahlen im Verhältnis von 3:1 verdeutlicht werden, d. h. die Walze 5 wird dreimal so schnell angetrieben wie die Walze 4. Dabei sind die beiden Walzen 4 und 5 durch den Antrieb so miteinander gekoppelt, daß die eine Leiste 14 der Walze 5 in eine Vertiefung 15 der Walze 4 trifft und dort der Bearbeitungsspalt 22 gebildet wird. Wenn die Walze 4 um 1/6 weitergedreht hat und die Walze 5 somit eine halbe Umdrehung gemacht hat, greift der andere Vorsprung 14 in die nächstfolgende Vertiefung 15 der Walze 4 ein und bildet dort wiederum einen Bearbeitungsspalt 22 usw. Bei diesem Ausführungs-Beispiel wird also der Bearbeitungsspalt 22 immer zwischen einem Vorsprung 14 und einer Vertiefung 15 gebildet. Es versteht sich, daß zwischen diesen aufgezeigten Bearbeitungsspalten 22 jeweils nochmals ein Bearbeitungsspalt 22 auftritt, der im Zusammenwirken eines Vorsprungs 13 an der Walze 4 mit einer Vertiefung 16 der Walze 5 gebildet ist. Zwei aufeinanderfolgende Bearbeitungsspalte weisen deshalb Durchmesserunterschiede gegeneinander auf, so daß die jeweils an dem Mähgutteppich 23 angreifenden Umfangsgeschwindigkeiten alternierend schwanken. Dies bedeutet, daß der Bearbeitungsspalt örtlich in radialer Richtung von den Walzen aus gesehen wandert. Wichtig ist vor allen Dingen, daß die Umfangsgeschwindigkeiten im Bearbeitungsspalt von ihrer absoluten Größe her gesehen gegeneinander einen nennenswerten Unterschied aufweisen, wie dies anhand von Figur 4 verdeutlicht ist.

Das Ausführungsbeispiel der Figur 5 zeigt eine Möglichkeit, bei der die beiden Walzen 4 und 5 unterschiedliche Durchmesser aufweisen. Auch hierbei ist durch unterschiedliche Drehzahlen, die im Verhältnis von 4:1 stehen, auf die Einwirkung unterschiedlicher Umfangsgeschwindigkeiten am Mähgutteppich geachtet. Die Walze 4 besitzt vier leistenförmige Vorsprünge 13 und vier in den Umfang der Walze 4 eingearbeitete Vertiefungen 15, während die Walze 5 nur einen Vorsprung 14 aufweist, der eine größere radiale Erstreckung als die Vorsprünge 13 besitzt und der mit den Vertiefungen 15 zusammenarbeitet. Auf diese Art und Weise werden zwei unterschiedliche Bearbeitungsspalte 22 gebildet, und zwar ein erster Bearbeitungsspalt zwischen dem Vorsprung 14 und jeder Vertiefung 15 und eine zweite Art von Bearbeitungsspalt 22 zwischen der Oberfläche der Walze 5 und den Vorsprüngen 13 der Walze 4.

Wenn die Walzen, wie am Beispiel der Figuren 3 und 5 dargestellt, mit ihren Vorsprüngen ineinandergreifen, ist ein bestimmtes Verhältnis der Drehzahlen zueinander erforderlich, damit die jeweilige Relativlage der Teile zueinander immer wieder erreicht bzw. eingehalten wird. Dabei muß die Ausbildung der Vorsprünge 13 und 14 so getroffen sein, daß diese immer wieder in die Vertiefungen 15 und 16 eingreifen bzw. aus diesen Vertiefungen wieder austreten können.

Die Realisierung ist nicht nur auf die Anwendung der dargestellten Anzahlen von Vorsprüngen 13 und 14 beschränkt.

Die Form der der leistenartigen Vorsprünge 13 und 14 kann rund oder kantig ausgebildet sein.

Bei der Ausführungsform gemäß Figur 6 sind die Durchmesser der Walzen 4 und 5 gleich. Es finden unterschiedliche Drehzahlen Anwendung. Auf der Oberfläche der Walzen 4 und 5 sind zwei unterschiedliche Arten von Vorsprüngen 13 und 13' vorgesehen. Die Walze 5 besitzt unterschiedlich hohe Vorsprünge 14 und 14'. Auch auf diese Art und Weise können Bearbeitungsspalte 22 gebildet werden.

Ein solcher Walzenaufbereiter, wie an den verschiedenen Beispielen erläutert, kann als getrennte Maschine realisiert werden. Es ist aber auch möglich, ihn zusammen mit einem Mähwerk 29 einzusetzen, welches gemäß Figur 1 in Arbeitsrichtung vorangehend angeordnet wird. Dieses Mähwerk besitzt dann beispielsweise einen Mähbalken 30, auf dem die einzelnen Mähteller 31 gelagert sind, wobei der Antrieb der Mähteller 31, eine Zahnradfolge o. dgl., in den Mähbalken 30 untergebracht ist. Auch hier ist aus Übersichtlichkeitsgründen dieser Antrieb nicht weiter dargestellt. Man erkennt anhand von Figur 1, daß die Arbeitsbreite des Mähwerks größer ist als die Arbeitsbreite der Walzen 4 und 5. Dies ist darauf zurückzuführen, daß die äußeren Mähteller 31 mit Förderwerkzeugen besetzt sein können, die den abgemähten Mähgutteppich in horizontaler Richtung zusammenführen, so daß die Walzen 4 und 5 nur noch eine entsprechend verkleinerte Länge und damit Arbeitsbreite besitzen müssen, um den auf einmal abgemähten Mähgutteppich zu bearbeiten.

**Bezugszeichenliste:**

| | | |
|---|---|---|
| 1 = | Rahmen | |
| 2 = | Seitenteil | |
| 3 = | Seitenteil | |
| 4 = | Walze | |
| 5 = | Walze | |
| 6 = | Lager | |
| 7 = | Lager | |
| 8 = | Lager | |
| 9 = | Lager | |
| 10 = | Anschlag | |
| 11 = | Feder | |
| 12 = | Durchzugsspalt | |
| 13 = | Vorsprung | |
| 14 = | Vorsprung | |
| 15 = | Vertiefung | |
| 16 = | Vertiefung | |
| 17 = | Antriebsrad | |
| 18 = | Zahnrad | |
| 19 = | Zahnrad | |
| 20 = | Kette | |
| 21 = | Rad | |
| 22 = | Bearbeitungsspalt | |
| 23 = | Mähgutteppich | |
| 24 = | Oberfläche | |
| 25 = | Pfeil | |
| 26 = | Oberfläche | |
| 27 = | Pfeil | |
| 28 = | Pfeil | |
| 29 = | Mähwerk | |
| 30 = | Mähbalken | |
| 31 = | Mähteller | |

**Patentansprüche**

1. Verfahren zum Aufbereiten eines geschnittenen , Mähgutteppichs (23), der durch von zwei gegenüberliegenden, beabstandeten, im festen Drehzahlverhältnis zueinander und gegensinnig angetriebenen Walzen (4, 5) gebildeten Durchzugsspalt (12) geführt und dabei unter Angriff an seiner Ober- und Unterseite (24, 26) geknickt und gequetscht wird, wobei eine Mehrzahl Bearbeitungsspalte (22) zwischen auf den zylindrischen Walzenoberflächen sich über die Arbeitsbreite erstreckenden, während der Rotation miteinander im Eingriff stehenden Vorsprüngen (13, 14) und Vertiefungen (15, 16) gebildet und diese Bearbeitungsspalte periodisch unterbrochen werden, dadurch gekennzeichnet, daß die Vorsprünge (13, 14) und die Vertiefungen (15, 16) an den Walzen (4, 5) an der Ober- und Unterseite (24, 26) des Mähgutteppichs (23) mit unterschiedlichen Umfangsgeschwindigkeiten (25, 27) angreifen, wobei sich unterschiedlichen Umfangsgeschwindigkeiten (25, 27) jeweils nach der periodischen Unterbrechung jedes Bearbeitungsspalts (22) ändern.

2. Verfahren nach Anspruch 1, dadurch gekennzeichnet, daß die unterschiedlichen Umfangsgeschwindigkeiten (25, 27) sich von Bearbeitungsspalt zu Bearbeitungsspalt alternierend ändern.

3. Verfahren nach Anspruch 1, dadurch gekennzeichnet, daß die in jedem Bearbeitungsspalt (22) auftretenden unterschiedlichen Umfangsgeschwindigkeiten (25, 27) etwa im Verhältnis von 1:2 bis 1:4 stehen.

4. Verfahren nach Anspruch 1 bis 3, dadurch gekennzeichnet, daß die Walzen (4, 5) mit gleicher oder auch unterschiedlicher Drehzahl angetrieben werden.

5. Walzenaufbereiter für einen geschnittenen Mähgutteppich zur Durchführung des Verfahrens nach Anspruch 1 oder 2, mit mindestens zwei gegensinnig umlaufenden, im festen Drehzahlverhältnis zueinander angetriebenen Walzen (4, 5), die auf ihren Oberflächen einander zugeordnete, sich über die Arbeitsbreite erstreckende, ineinandergreifende leistenartige Vorsprünge (13, 14) und Vertiefungen (15, 16) aufweisen, die jeweils einen Bearbeitungsspalt (22) für den Mähgutteppich (23) bilden, dadurch gekennzeichnet, daß die leistenartigen Vorsprünge (13, 14, 13', 14') und Vertiefungen (15, 16) auf dem Umfang der beiden einander zugeordneten Walzen (4, 5) so verteilt angeordnet und die Walzen (4, 5) so angetrieben sind, daß sich unterschiedliche Umfangsgeschwindigkeiten in den Bearbeitungsspalten (22) ergeben, und daß die Vorsprünge und Vertiefungen aus Metall bestehen.

6. Walzenaufbereiter nach Anspruch 5, dadurch gekennzeichnet, daß die Walzen (4, 5) gleiche oder ungleiche Durchmesser aufweisen.

7. Walzenaufbereiter nach Anspruch 5 und/oder 6, dadurch gekennzeichnet, daß die Vorsprünge (13, 14, 13', 14') und Vertiefungen (15, 16) in die Oberfläche der Walzen (4, 5) integriert sind und die Walzen somit unrunden Querschnitt aufweisen.

8. Walzenaufbereiter nach einem oder mehreren der Ansprüche 5 bis 7, dadurch gekennzeichnet, daß die Vorsprünge (13, 14, 13', 14') und Vertiefungen (15, 16) mit entsprechend ihren jeweils unterschiedlichen Umfangsgeschwindigkeiten (25, 27) unterschiedlichen Spiralwinkeln auf der Oberfläche der Walzen (4, 5) vorgesehen sind.

9. Walzenaufbereiter nach einem oder mehreren der Ansprüche 5 bis 8, dadurch gekennzeichnet, daß die beiden einander zugeordneten Walzen (4, 5) eine unterschiedliche Anzahl von Vorsprüngen aufweisen, und daß das Verhältnis der Anzahlen der Vorsprünge der beiden Walzen dem umgekehrten Drehzahlverhältnis der beiden Walzen zueinander entspricht.

**Claims**

1. Process for preparing a cut mowing crop mat (23), which is passed through a passage gap (12) formed by two spaced, oppositely situated rollers (4, 5) driven in a fixed rotational speed ratio to one another and in opposite directions and is snapped and squeezed therein by action on its upper and lower sides (24, 26), a plurality of processing gaps (22) being formed between projections (13, 14) and depressions (15, 16) extending over the working width on the cylindrical roller surfaces and engaging with one another during the rotation, and these processing gaps being periodically interrupted, characterised in that the projections (13, 14) and the depressions (15, 16) on the rollers (4, 5) act at different peripheral speeds (25, 27) on the upper and lower sides (24, 26) of the mowing crop mat (23), different peripheral speeds (25, 27) varying in each case in accordance with the periodic interruption of each processing gap (22).

**2.** Process according to Claim 1, characterised in that the different peripheral speeds (25, 27) vary alternately from one processing gap to the next.

**3.** Process according to Claim 1, characterised in that the different peripheral speeds (25, 27) occurring in each processing gap (22) are approximately in the ratio of from 1:2 to 1:4.

**4.** Process according to Claims 1 to 3, characterised in that the rollers (4, 5) are driven at the same or else at different rotational speeds.

**5.** Roller preparation machine for a cut mowing crop mat for carrying out the process according to Claim 1 or 2, comprising at least two rollers (4, 5) which rotate in opposite directions and are driven in a fixed rotational speed ratio to one another and which have on their surfaces interengaging strip-like projections (13, 14) and depressions (15, 16) which coact with one another and extend over the working width and which in each case form a processing gap (22) for the mowing crop mat (23), characterised in that the strip-like projections (13, 14, 13', 14') and depressions (15, 16) on the periphery of the two rollers (4, 5) coacting with one another are distributed in such a manner and the rollers (4, 5) are driven such that different peripheral speeds are produced in the processing gaps (22), and in that the projections and depressions are composed of metal.

**6.** Roller preparation machine according to Claim 5, characterised in that the rollers (4, 5) have equal or unequal diameters.

**7.** Roller preparation machine according to Claim 5 and/or 6, characterised in that the projections (13, 14, 13', 14') and depressions (15, 16) are integrated into the surfaces of the rollers (4, 5) and the rollers thus have a noncircular cross-section.

**8.** Roller preparation machine according to one or more of Claims 5 to 7, characterised in that the projections (13, 14, 13', 14') and depressions (15, 16) are provided on the surfaces of the rollers (4, 5) with different spiral angles in accordance with their individual different peripheral speeds (25, 27).

**9.** Roller preparation machine according to one or more of Claims 5 to 8, characterised in that the two rollers (4, 5) coacting with one another have different numbers of projections, and in that the ratio of the numbers of projections on the two rollers corresponds to the inverse rotational speed ratio of the two rollers to one another.

**Revendications**

**1.** Procédé de conditionnement d'un tapis de fourrage coupé (23) guidé dans une fente de passage (12) formée par deux rouleaux (4, 5) opposés et espacés, entraînés dans des sens opposés avec un rapport fixe entre leurs vitesses de rotation, ce tapis (23) étant plié et serré par une action sur ses faces supérieure et inférieure (24, 26), tandis qu'une pluralité de fentes de travail (22) sont formées entre des saillants (13, 14) et des creux (15, 16) s'étendant sur les surfaces cylindriques des rouleaux dans le sens de la largeur de travail et engrenant entre eux au cours de la rotation, ces fentes de travail étant périodiquement interrompues,
**caractérisé** en ce que les saillants (13, 14) et les creux (15, 16) sur les rouleaux (4, 5) agissent avec des vitesses périphériques différentes (25, 27) sur les faces supérieure et inférieure (24, 26) du tapis de fourrage (23), tandis que les vitesses périphériques différentes (25, 27) varient chaque fois selon l'interruption périodique de chaque fente de conditionnement (22).

**2.** Procédé selon la revendication 1, caractérisé en ce que les vitesses périphériques différentes (25, 27) varient alternativement d'une fente de travail à l'autre.

**3.** Procédé selon la revendication 1, caractérisé en ce que les vitesses périphériques différentes (25, 27) apparaissant dans chaque fente de travail (22) sont dans un rapport d'environ 1:2 à 1:4.

**4.** Procédé selon les revendications 1 à 3, caractérisé en ce que les rouleaux (4, 5) sont entraînés à des vitesses de rotation égales ou différentes.

**5.** Conditionneur à rouleaux pour un tapis de fourrage coupé, pour la mise en oeuvre du procédé selon la revendication 1 ou 2, avec au moins deux rouleaux (4, 5) tournant dans des sens opposés, entraînés à des vitesses de rotation ayant entre elles un rapport fixe, présentant sur leurs surfaces des saillants (13, 14) en forme de lattes et des creux (15, 16) associés entre eux, ces éléments s'étendant sur la largeur de travail et engrenant entre eux en formant chaque fois une fente de conditionne-

ment (22) pour le tapis de fourrage (23),
**caractérisé** en ce que les saillants (13, 14, 13', 14') en forme de lattes et les creux (15, 16) sont répartis sur la périphérie des deux rouleaux (4, 5) associés entre eux et les rouleaux (4, 5) sont entraînés de telle sorte qu'il en résulte des vitesses périphériques différentes dans les fentes de conditionnement (22), et en ce que les saillants et les creux sont en métal.

6. Conditionneur à rouleaux selon la revendication 5, caractérisé en ce que les rouleaux (4, 5) présentent des diamètres égaux ou différents.

7. Conditionneur à rouleaux selon les revendications 5 et/ou 6, caractérisé en ce que les saillants (13, 14, 13', 14') et les creux (15, 16) sont intégrés à la surface des rouleaux (4, 5) et que, de ce fait, les rouleaux présentent une section non ronde.

8. Conditionneur à rouleaux selon une ou plusieurs des revendications 5 à 7, caractérisé en ce que les saillants (13, 14, 13', 14') et les creux (15, 16) sont prévus sur la surface des rouleaux (4, 5) avec des angles d'hélice différents correspondant à leurs vitesses périphériques (25, 27) chaque fois différentes.

9. Conditionneur à rouleaux selon une ou plusieurs des revendications 5 à 8, caractérisé en ce que les deux rouleaux (4, 5) associés l'un à l'autre présentent un nombre différent de saillants, et en ce que le rapport des nombres de saillants des deux rouleaux correspond à l'inverse du rapport entre les vitesses de rotation des deux rouleaux, l'un par rapport à l'autre.

Fig. 1

Fig. 2

Fig. 3

Fig. 4

Fig. 5

Fig. 6